# EUROPEAN PATENT APPLICATION

(11) **EP 2 712 212 A2**
(43) Date of publication of application: **26.03.2014**
(21) Application number: 11777279.8
(22) Date of filing: 01.07.2011
(51) Int. Cl.: H04W 4/02

(54) **COMMUNICATION TERMINAL, SYSTEM AND METHOD FOR LOCATION-BASED SERVICE**

(71) Applicant: Huawei Device Co., Ltd., Longgang District Shenzhen Guangdong 518129 (CN)
(72) Inventor: LIU, Haibo, Shenzhen Guangdong 518129 (CN)
(74) Representative: Goddar, Heinz J.
(86) International application number: PCT/CN2011/076743
(87) International publication number: WO 2011/137860

(57) **Abstract**

An embodiment of the present invention discloses a communication terminal for providing a location-based service, including: a data processor, configured to receive a location-based service request, send a positioning request to a locator and obtain current coordinate data, send a corresponding map request to a map acquisition device according to the coordinate data and obtain corresponding map data, generate location data according to the coordinate data and the corresponding map data, and send the location data to a host; the locator, configured to obtain the positioning request from the data processor, obtain the coordinate data of the communication terminal, and send the coordinate data to the data processor; and the map acquisition device, configured to obtain the map request from the data processor, obtain the corresponding map data, and send the map data to the data processor. Embodiments of the present invention also disclose a corresponding system and method. By applying the embodiment of the present invention, the host may directly read location data sent by a terminal side without using any dedicated application program.

## Description

### TECHNICAL FIELD

The present invention relates to the field of communications technologies, and in particular to a communication terminal, a system and a method for providing a location-based service.

### BACKGROUND

A location-based service (Location Based Service, LBS) is a value-added service to provide corresponding services for users under support of a geographic information system (Geographic Information System, GIS) platform by obtaining location information (geographic coordinates or geodetic coordinates) of a mobile terminal user through a radio communication network of a telecommunications mobile network operator, such as a Global System of Mobile communication (Global System of Mobile communication, GSM) or a code division multiple access network (Code Division Multiple Access, CDMA), or in an external positioning manner, such as a global positioning system (Global Positioning System, GPS). With the popularity of the location-based service, more and more communication terminal devices are provided with a positioning capability; however, due to a difference in design of different terminal manufacturers, it is impossible to use these communication terminal devices to develop a location-based service in a universal manner. For example, some communication terminal devices support use of a National Marine Electronics Association (National Marine Electronics Association, NMEA) protocol to obtain location information, while some communication terminal devices need to use a private command (for example, private AT command) to obtain location information. Currently, a solution that a terminal device provides a location-based service to a host is as follows:

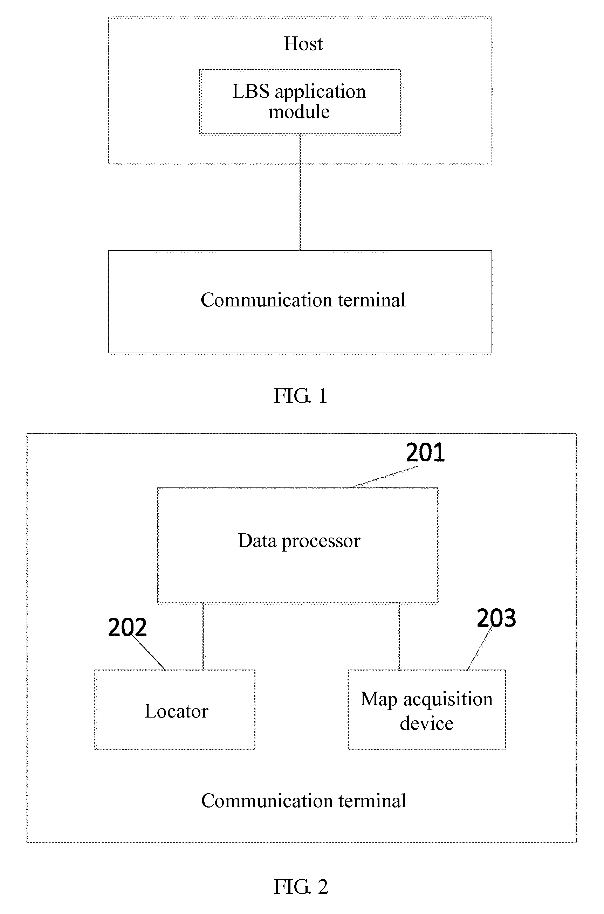

Referring to FIG. 1, the communication terminal device obtains coordinate data through a positioning service, for example, a GPS or an assisted global positioning system (Assisted Global Positioning System, AGPS), downloads corresponding map data through a network capability of the communication terminal device, and then sends the coordinate data and the map data to the host; and an LBS application module on a host side draws a map including a device coordinate point according to the data, and the host displays the map to the user.

The inventor finds that this technology at least has the following defects:

There is a difference in design of communication terminal devices of various terminal manufacturers, and a host cannot use a universal operating system to directly read data sent by a terminal side. Moreover, coordinate data and map data sent by the terminal side need to be combined and processed on a host side; therefore, a dedicated application program needs to be used on the host side to implement a location-based service, thereby reducing usability of the location-based service and increasing a development difficulty of an application program on the host side.

### SUMMARY

Embodiments of the present invention disclose a communication terminal, a system and a method for providing a location-based service, which implement combination and processing of coordinate data and map data on a terminal side, so that a host may directly read location data sent by the terminal side without using any dedicated application program.

An embodiment of the present invention discloses a communication terminal for providing a location-based service, including
a data processor, configured to receive a location-based service request, send a positioning request to a locator and obtain current coordinate data, send a corresponding map request to a map acquisition device according to the coordinate data and obtain corresponding map data, generate location data according to the coordinate data and the corresponding map data, and send the location data to a host;
the locator, configured to obtain the positioning request from the data processor, obtain the coordinate data of the communication terminal, and send the coordinate data to the data processor; and
the map acquisition device, configured to obtain the map request from the data processor, obtain the corresponding map data, and send the map data to the data processor.

An embodiment of the present invention discloses a system for providing a location-based service, including:
a location-based service communication terminal, configured to receive a location-based service request from a host, obtain coordinate data of the communication terminal and corresponding map data, generate location data according to the coordinate data and the corresponding map data, and send the location data to the host; and
a host, configured to send the location-based request to the communication terminal, receive the location data from the communication terminal, and provide a location-based service according to the location data.

An embodiment of the present invention discloses a method for providing a location-based service, which is applied to a mobile terminal having a positioning capability, and the method includes:
receiving, by the mobile terminal, a location service request;
obtaining current coordinate data of the mobile terminal;
obtaining corresponding map data according to the coordinate data;
generating location data according to the obtained coordinate data and corresponding map data; and
sending the location data to a host, so that the host provides a location-based service according to the location data.

By applying the communication terminal, the system and the method for providing the location-based service according to the embodiments of the present invention, the host may use a universal operating system to directly read the location data sent by the terminal side, which increases usability of the location-based service and reduces a development difficulty of a related application program.

### BRIEF DESCRIPTION OF DRAWINGS

FIG. 1 is a schematic structural diagram of an existing system;
FIG. 2 is a schematic structural diagram of a communication terminal according to an embodiment of the present invention;
FIG. 3 is a schematic structural diagram of another communication terminal according to an embodiment of the present invention;
FIG. 4 is a schematic structural diagram of a system according to an embodiment of the present invention; and
FIG. 5 is a flow chart of a method for providing a location-based service according to an embodiment of the present invention.

### DESCRIPTION OF EMBODIMENTS

To make the objectives, technical solutions, and advantages of the embodiments of the present invention clearer, the following further describes the embodiments of the present invention in detail with reference to the accompanying drawings.

First, it should be noted that, a communication terminal described in the embodiments of the present invention includes, but is not limited to, an electronic device such as a data card, a wireless module, a GPS module or a mobile phone having a positioning function, and any other communication terminal device capable of obtaining its own location data may also be applied to the technical solutions disclosed in the present invention. The data card is taken as an example for description in the following embodiment, which is merely an exemplary embodiment and is not intended to limit the present invention. In addition, a host described in the embodiment of the present invention includes, but is not limited to, an electronic device such as a desk-top personal computer, a portable computer, a tablet computer or a mobile phone.

### Embodiment of a Communication Terminal

Referring to FIG. 2, an embodiment of the present invention provides a communication terminal for providing a location-based service, where a data card is taken as an example for description in the embodiment of the present invention, and the communication terminal for providing a location-based service includes a data processor 21, a locator 22, and a map acquisition device 23.

The data processor 21 is configured to receive a location-based service request, send a positioning request to the locator 22 and obtain current coordinate data, send a corresponding map request to the map acquisition device 23 according to the coordinate data and obtain corresponding map data, generate location data according to the coordinate data and the corresponding map data, and send the location data to a host.

Specifically, the data processor receives the location-based service request from a host device, and sends the positioning request to the locator 22 to obtain the current coordinate data of the data card. After obtaining the coordinate data returned by the locator 22, the data processor 21 adds the coordinate data to the map request, where the map request may also include map attributes such as a size and a proportion of a map, and optionally, these map attributes may also be preset and stored in the data card. The data processor 21 sends the map request to the map acquisition device 23, obtains returned map data, combines and processes obtained positioning data and map data, and generates the location data, which includes a coordinate point where the data card is located and a peripheral map of the coordinate point. The location data may be a webpage data file, for example, "http://myLBS/index.html", and may also be a graphics data file, for example, "myLBS.jpg", or a file in another data format that may be directly read by the host using a universal operating system and be displayed to a user. Finally, the data processor 21 sends the location data to the host, so that the host provides a location-based service to the user according to the location data. The location-based service may directly display content of the location data to the user, and may also provide, according to the location data, other location-based service information, for example, information about peripheral restaurants and entertainment facilities. In this way, the host side may directly read the location data through an application program of an operating system, such as a browser and an image viewer, but does not need to perform additional processing on webpage data or graphics data, which improves adaptability of the location-based service.

The locator 22 is configured to receive the positioning request from the data processor 21, obtain the coordinate data of the data card, and send the coordinate data to the data processor 21.

The locator 22 may obtain the coordinate data of the data card in a manner of GPS positioning, AGPS positioning, cell positioning or Wi-Fi positioning or in another positioning manner. It is taken as an example that a current location of the data card is "Beijing Hotel, Beijing city", and the obtained coordinate data indicates that coordinates of the current location of the data card are "116°416969E', 39°914485N"'. Further, the coordinate data may also include parameter information, such as an altitude and a magnetic declination.

The map acquisition device 23 is configured to receive the map request from the data processor 21, obtain the corresponding map data, and send the map data to the data processor 21.

After receiving the map request from the data processor 21, the map acquisition device 23 downloads, according to information, such as the coordinate point and the size and proportion of the map, included in the map request, the corresponding map data from a network server, for example, "Google Map", through 3G, WLAN, Wi-Fi or another network capability of the data card and sends the map data to the data processor 21. The network server may be preset and stored by the data card, and may also be modified by the user through a background program of the data card, so as to select a suitable network server.

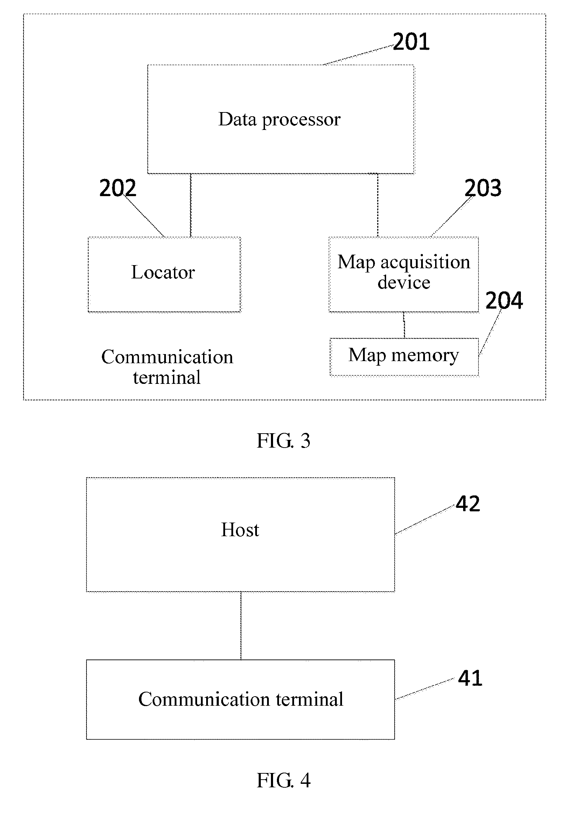

Optionally, referring to FIG. 3, the data card may further include:
a map memory 24, configured to store the map data locally in the data card.

If the data card is capable of obtaining the corresponding map data from the data card locally, the map acquisition device 23 takes the corresponding map data from the map memory 24 after receiving the map request from the data processor 21. In this way, the data card can obtain the corresponding map data without using network connection, so that the communication terminal that locally stores available map information may obtain the corresponding map data without having a network connection capability and accordingly implement the technical solution.

It should be noted that, the data processor 21, the locator 22, and the map acquisition device 23 in the embodiment of the present invention may be implemented by separated hardware modules, and may also be an integrated micro-processor, which is configured to implement functions of data processing, coordinate data acquisition, and map data acquisition at the same time; and may also be functional modules integrated in a master chip. The map memory 24 may be a dedicated memory, may also be a part of storage space in a large capacity memory, and may still be an external memory connecting to the data card, for example, a security digital (Security Digital, SD) card.

In this embodiment, the data processor 21 receives the location-based service request from the host and sends the positioning request to the locator 22; the locator 22 obtains the current coordinate data of the data card in a positioning manner such as GPS positioning and returns the coordinate data to the data processor 21; the data processor 21 sends the corresponding map request to the map acquisition device 23 according to the coordinate data; the map acquisition device 23 downloads from the network server or takes from the map memory 24 the corresponding map data and returns the map data to the data processor 21; the data processor 21 combines the coordinate data and the corresponding map data to generate the location data, where the location data may be webpage data or graphics data; the data processor 21 sends the location data to the host; and the host reads the location data and provides the location-based service. By applying the communication terminal according to the embodiment of the present invention, the problem that when providing the location-based service, the host needs to use a dedicated application program to process data sent by the terminal side is solved, which improves usability of the location-based service and reduces a development difficulty of the application program on the host side.

### Embodiment of a System

Referring to FIG. 4, an embodiment of the present invention provides a system for providing a location-based service, including:
a data card 41, configured to receive a location-based service request from a host 42, obtain coordinate data of the data card 41 and corresponding map data, generate location data according to the coordinate data and the corresponding map data, and send the location data to the host 42, where
for a specific structure and operation of the data card 41, reference may be made to related content in the embodiment of the communication terminal and the method embodiment, and details are not repeatedly described herein; and
a host 42, configured to send the location-based request to the data card 41, receive the location data from the data card 41, and provide a location-based service according to the location data.

The communication terminal 41 and the host 42 are connected through a universal serial bus (Universal Serial BUS, USB), bluetooth, a 2.4g non-networking solution (2.4G), a mini video card bus interface (Mini PCI-E), a serial peripheral interface (Serial Peripheral Interface, SPI), a universal asynchronous receiver/transmitter (Universal Asynchronous Receiver/Transmitter, UART), a mobile industry processor interface (Mobile Industry Processor Interface, MIPI), or a secure digital input and output (Secure Digital Input and Output, SDIO) interface, or in another manner.

Specifically, the location request sent by the host 42 may include location-based service parameters such as a positioning frequency, a map size, and a map proportion. If the location data received by the host 42 is webpage data, the host 42 may read the webpage data through a universal browser, for example, IE, Firefox, and Maxthon, and provide a location-based service to a user. The location-based service may directly display content of the location data to the user, and may also provide, according to the location data, other location-based service information, for example, information about peripheral restaurants and entertainment facilities. Further, the user may set and modify location-based service parameters, such as the positioning frequency, the map size, and the map proportion, through the browser. If the location data received by the host 42 is graphics data, the host 42 may read the location data through an image viewer or any other application program that may open and display the graphics data. Therefore, a program developer on a host side does not need to study specific acquisition details of the coordinate data, does not need to concern about acquisition and display of the map data, and also does not need to develop a dedicated application program based on a special command/protocol, such as AT and NEMA.

In this embodiment, the host 42 sends the location-based service request to the data card 41; the data card 41 obtains the coordinate data of the data card 41 and the corresponding map data, combines the coordinate data and the corresponding map data to generate the location data, and sends the location data to the host 42, where the location data is webpage data or graphics data; and the host 42 receives the location data and provides the location-based service according to the location data. By applying the system according to the embodiment of the present invention, during a process of providing the location-based service, the host may read the location data sent by the communication terminal without using any dedicated application program and provide the location-based service to the user, which simplifies an implementation process of the location-based service, avoids developing work of a dedicated application program on the host side, and improves usability of the location-based service.

### Embodiment of a Method

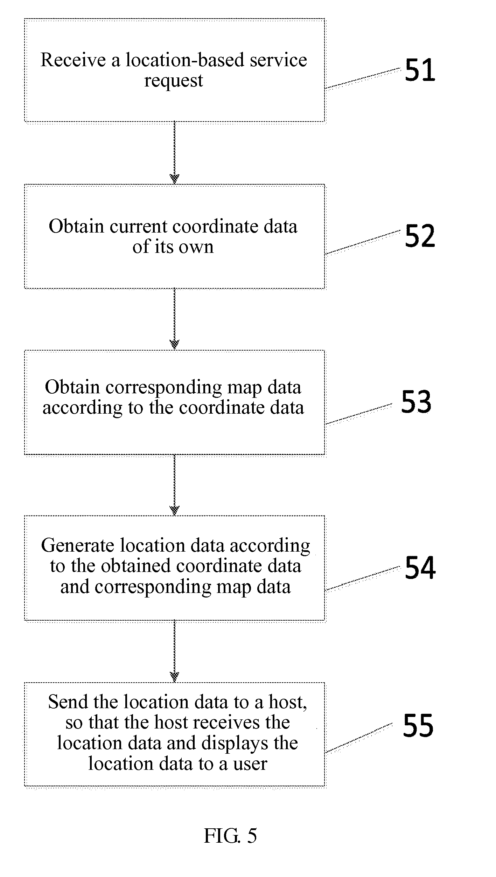

Referring to FIG. 5, an embodiment of the present invention provides a method for providing a location-based service, where the method is applied to a communication terminal having a positioning capability, and taking a data card as an example, the method includes the following steps:
Step 51: Receive a location service request.
   The data card receives the location service request from a host, where the location service request may include location service parameters such as a positioning frequency, a map size, and a map proportion, and the data card may also pre-store the location service parameters.
Step 52: Obtain current coordinate data of the data card.
   After receiving the location service request, the data card may obtain its current coordinate data in a manner of GPS positioning, AGPS positioning, cell positioning or Wi-Fi positioning or in another positioning manner. It is taken as an example that a current location of the data card is "Beijing Hotel, Beijing city", and the obtained coordinate data indicates that coordinates of the current location of the data card are "116°416969E', 39°914485N"'. Further, the coordinate data may also include parameter information, such as an altitude and a magnetic declination.
Step 53: Obtain corresponding map data according to the coordinate data.
   After obtaining the coordinate data, the data card obtains map data corresponding to the coordinate data according to the coordinate data, for example, a map within a coverage of 10 km centered at a coordinate point where the data card is located, where main parameters such as a size and a proportion of the map may be set by the host in the location update request sent in step 51, and may also be preset and stored by the data card. The data card may download the corresponding map data from a network server, for example, "Google Map", through 3G, WLAN, Wi-Fi network connection or another network connection capability of the data card. The network server may be preset and stored by the data card, and may also be modified by a user through a background program of the data card, so as to select a suitable network server. Further, if the data card locally stores available map information, the corresponding map data may also be taken from the local storage. Therefore, the communication terminal that locally stores available map information may obtain the corresponding map data without having a network connection capability and accordingly implement the technical solution.
Step 54: Generate location data according to the obtained coordinate data and corresponding map data.
   After obtaining the corresponding map data, the data card combines and processes the obtained positioning data and map data, and generates the location data, which includes the coordinate point where the data card is located and a peripheral map of the coordinate point. The location data may be a webpage data file, for example, "http://myLBS/index.html", and may also be a graphics data file, for example, "myLBS.jpg", or a file in another data format that may be directly read by the host using a universal operating system and provides a location-based service to the user.
Step 55: Send the location data to the host, so that the host provides the location-based service to the user according to the location data.
   Specifically, if the location data received by the host is webpage data, the host may read the webpage data through a universal browser, for example, IE, Firefox, Maxthon, and display the webpage data to the user. If the location data received by the host is graphics data, the host may read the location data through an image viewer or any other application program that may open and display the graphics data. The location-based service may directly display content of the location data to the user, and may also provide, according to the location data, other location-based service information, for example, information about peripheral restaurants and entertainment facilities. Therefore, a program developer on a host side does not need to study specific acquisition details of the coordinate data, does not need to concern about acquisition and display of the map data, and also does not need to develop a dedicated application program based on a special command/protocol, such as AT and NEMA.

In this embodiment, the data card receives the location service request from the host, obtains the current coordinate data of the data card, obtains the corresponding map data through network download or from local storage according to the coordinate data, combines and processes the obtained coordinate data and corresponding map data, generates webpage data or graphics data, and send the generated data to the host; and the host directly reads the data content and displays the content to the user, so that use of dedicated application software on the host side is omitted during a process of providing the location-based service, acquisition and generation of the location data are implemented on a terminal side, and the host side may directly read the location data by using a universal operating system, which improves usability and adaptability of the location-based service.

A person skilled in the art may understand that, the accompanying drawings are merely schematic diagrams of an exemplary embodiment, and modules, entities, or processes in the accompanying drawings are not necessarily required in implementation of the present invention.

A person skilled in the art that may understand that, modules or entities in a terminal according to an embodiment may be distributed in the terminal of the embodiment according to a description of the embodiment, or be correspondingly changed and be disposed in one or more devices different from this embodiment. The modules or entities of the foregoing embodiment may be combined into one module or entity, or further divided into a plurality of sub-modules or sub-entities.

Through the description of the foregoing embodiments, a person skilled in the art may clearly understand that the present invention may be implemented by virtue of software plus a necessary universal hardware platform, and definitely, may also be implemented by hardware; however, in most cases, the former is a preferred implementation manner. Based on such understanding, the technical solutions of the present invention essentially, or the part contributing to the prior art may be embodied in a form of a software product. The computer software product is stored in a readable storage medium, for example, a floppy disk, a hard disk, or an optical disk of a computer, and includes several instructions used to instruct a computer device (which may be a personal computer, a server, or a network device, or the like) to perform the method according to each embodiment of the present invention.

The foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions recorded in the foregoing embodiments or equivalent replacements may still be made to some technical features thereof, without departing from the spirit and scope of the technical solutions of the embodiments of the present invention.

## Claims

1. A communication terminal for providing a location-based service, comprising:
a data processor, configured to receive a location-based service request, send a positioning request to a locator and obtain current coordinate data, send a corresponding map request to a map acquisition device according to the coordinate data and obtain corresponding map data, generate location data according to the coordinate data and the corresponding map data, and send the location data to a host;
the locator, configured to obtain the positioning request from the data processor, obtain the coordinate data of the communication terminal, and send the coordinate data to the data processor; and
the map acquisition device, configured to obtain the map request from the data processor, obtain the corresponding map data, and send the map data to the data processor.

2. The communication terminal according to claim 1, further comprising: a map memory, configured to store the map data.

3. The communication terminal according to claim 1 or 2, wherein that the map acquisition device obtains the corresponding map data comprises: downloading the corresponding map data from a network server.

4. The communication terminal according to claim 2, wherein that the map acquisition device obtains the corresponding map data further comprises: obtaining the corresponding map data from the map memory.

5. The communication terminal according to any one of claims 1 to 4, wherein the locator obtains the coordinate data in a manner comprising: global positioning system GPS positioning, assisted global positioning system AGPS positioning, cell positioning, or wireless fidelity Wi-Fi positioning.

6. The communication terminal according to any one of claims 1 to 5, wherein the location data generated by the data processor comprises a coordinate point where the communication terminal is located and a peripheral map of the coordinate point.

7. The communication terminal according to any one of claims 1 to 6, wherein the location data generated by the data processor is webpage data or graphics data.

8. The communication terminal according to any one of claims 1 to 7, wherein the communication terminal comprises a data card, a smart phone, a wireless module, or a GPS module.

9. A system for providing a location-based service, comprising:
a location-based service communication terminal, configured to receive a location-based service request from a host, obtain coordinate data of the communication terminal and corresponding map data, generate location data according to the coordinate data and the corresponding map data, and send the location data to the host; and
a host, configured to send the location-based request to the communication terminal, receive the location data from the communication terminal, and provide a location-based service according to the location data.

10. The system according to claim 9, wherein the communication terminal and the host are connected through a universal serial bus USB, bluetooth, 2.4G, a mini video card bus interface Mini PCI-E, a serial peripheral interface SPI, a universal asynchronous receiver/transmitter UART, a mobile industry processor interface MIPI, or a secure digital input and output SDIO interface.

11. The system according to claim 9 or 10, wherein the providing a location-based service according to the location data comprises directly displaying content of the location data.

12. A method for providing a location-based service, wherein the method is applied to a mobile terminal having a positioning capability, and the method comprises:
receiving, by the mobile terminal, a location service request;
obtaining current coordinate data of the mobile terminal;
obtaining corresponding map data according to the coordinate data;
generating location data according to the obtained coordinate data and corresponding map data; and
sending the location data to a host, so that the host provides a location-based service according to the location data.

13. The method according to claim 12, wherein the obtaining corresponding map data comprises: downloading the corresponding map data from a network server or obtaining the corresponding map data from local storage of the communication terminal.

14. The method according to claim 12 or 13, wherein the obtaining current coordinate data of the mobile terminal is implemented in a manner comprising: GPS positioning, AGPS positioning, cell positioning, or Wi-Fi positioning.

15. The method according to any one of claims 12 to 14, wherein the location data comprises a coordinate point where the communication terminal is located and a peripheral map of the coordinate point.

16. The method according to any one of claims 12 to 15, wherein the location data is webpage data or graphics data.

17. The method according to any one of claims 12 to 16, wherein the providing a location-based service according to the location data comprises directly displaying content of the location data.
